**Europäisches Patentamt**

**European Patent Office**

**Office européen des brevets**

(19)

(11) Veröffentlichungsnummer : **0 376 031 B1**

(12)

# EUROPÄISCHE PATENTSCHRIFT

(45) Veröffentlichungstag der Patentschrift :
**17.03.93 Patentblatt 93/11**

(51) Int. Cl.$^5$ : **C01G 23/053**

(21) Anmeldenummer : **89122775.3**

(22) Anmeldetag : **09.12.89**

(54) **Verfahren zur Rückgewinnung von Schwefelsäure bei der Titandioxidprodukten.**

(30) Priorität : **24.12.88 DE 3843846**

(43) Veröffentlichungstag der Anmeldung :
**04.07.90 Patentblatt 90/27**

(45) Bekanntmachung des Hinweises auf die
Patenterteilung :
**17.03.93 Patentblatt 93/11**

(84) Benannte Vertragsstaaten :
**BE DE ES FR GB IT NL**

(56) Entgegenhaltungen :
**FR-A- 1 303 745**
**FR-A- 1 550 299**

(73) Patentinhaber : **BAYER AG**
**W-5090 Leverkusen 1 Bayerwerk (DE)**

(72) Erfinder : **Wiederhöft, Gerhard**
**Im Heggelsfeld 22**
**W-4150 Krefeld 1 (DE)**
Erfinder : **Bayer, Eckhard, Dr.c/o Mobay Corp**
**PK Division**
**Iron Oxide**
**New Martinsville, W. Virginia 26155-0500 (US)**
Erfinder : **Müller, Wolfgang, Dieter, Dr.**
**Bodelschwinghstrasse 19**
**W-4150 Krefeld (DE)**
Erfinder : **Lailach, Günter, Dr.**
**Bismarckstrasse 109**
**W-4150 Krefeld (DE)**

## Beschreibung

Die Erfindung betrifft ein Verfahren zur Herstellung von $TiO_2$-Pigmenten unter Rückgewinnung von Schwefelsäure, die als Dünnsäure bei der $TiO_2$-herstellung nach dem Sulfatverfahren anfällt, wobei die Konzentration der zur Eindampfung und Abtrennung der Metallsulfate vorgesehenen Dünnsäure dadurch erhöht wird, daß Dünnsäure oder Waschflüssigkeit mit geringerem $H_2SO_4$-Gehalt, die beim Waschen des $TiO_2$-Hydrolysats anfällt, bei der Titanylsulfathydrolyse zugesetzt wird.

Es ist bekannt, daß die Erhöhung der Schwefelsäurekonzentration in der Dünnsäure, die für eine Schwefelsäurerückgewinnung oder eine Verklappung vorgesehen ist, im allgemeinen wirtschaftlich vorteilhaft ist. Eine Erhöhung der Schwefelsäurekonzentration von 23 auf 25 % führt beispielsweise dazu, daß aus der Dünnsäure vor der Metallsulfatabtrennung ca. 15 % weniger Wasser abgedampft werden muß.

Im Anbetracht dieses Vorteils ist z.B. in DE-C 27 29 755 vorgeschlagen worden, Dünnsaure oder Waschflüssigkeit zum $TiO_2$-Rohstoffaufschluß zurückzuführen. Dabei sind aber besondere Limitierungen zu beachten, wenn z.B. eine Verschlechterung der Pigmentqualität durch die gleichzeitig mit zurückgeführten farbtonrelevanten Schwermetallionen vermieden werden soll.

Bekannt ist aus US 2 331 496 ein Verfahren zur Hydrolyse von Titansalzen, bei dem zuerst in verdünnter Lösung Hydrolysekeime gebildet werden, bevor die Hauptmenge der Titansalzlösung zugesetzt wird. Dabei kann für die Keimbildung statt Wasser auch Waschlösung oder eine Flüssigkeit mit relativ geringem Titangehalt vorgelegt werden. Aus der Forderung, daß während der Keimbildung und -alterung der pH-Wert konstant bei etwa 1,2 gehalten werden soll, resultiert aber, daß diese Flüssigkeiten nur unwesentliche Mengen Schwefelsäure enthalten dürfen. Somit bietet sich hier keine Möglichkeit, durch Rückführung nennenswerter Mengen Dünnsäure oder Waschflüssigkeit eine merkliche Erhöhung der Dünnsäurekonzentration zu erreichen.

Aufgabe war es daher, ein Verfahren zur Verfügung zu stellen, durch das die $H_2SO_4$-Konzentration in der Dünnsäure erhöht wird, ohne daß daraus eine wesentliche Verringerung der Hydrolyseausbeute oder Verschlechterung der Pigmentqualität resultiert.

Gegenstand der Erfindung ist ein Verfahren zur Herstellung von $TiO_2$-Pigmenten durch Hydrolyse von Titanylsulfat, wobei die Hydrolyse des Titanylsulfats unter Verwendung von separat erzeugten Hydrolysekeimen erfolgt, die durch Reaktion von Titansalzen mit alkalischen Reagenzien erzeugt worden sind, Abtrennen des Hydrolysats von der bei der Hydrolyse erzeugten Dünnsäure, Waschen des Hydrolysats und Kalzinieren des Hydrolysats unter Bildung von $TiO_2$-Pigmenten, welches sich dadurch auszeichnet, daß nach mindestens 50 % der Gesamtdauer des Hydrolyseprozesses Dünnsäure und/oder dünnsäurehaltige Waschflüssigkeit zugefügt wird.

Vorzugsweise werden 0,1 bis 1,5 m³ Dünnsäure und/oder Waschflüssigkeit pro 1 t $TiO_2$ bei der Hydrolyse zugesetzt.

Wird die außer $H_2SO_4$ auch Fe-, Cr- und V-Sulfate enthaltende Dünnsäure oder Waschflüssigkeit anstelle von Wasser zu Beginn der Titanylsulfathydrolyse zugegeben, so verringert sich die Hydrolyseausbeute und die $TiO_2$-Pigmentqualität verschlechtert sich (siehe auch Beispiele 2, 3 und 5). Wird hingegen erfindungsgemäß die Titanylsulfathydrolyse mit separat erzeugten Hydrolysekeimen durchgeführt, die durch Reaktion von Titansalzen mit alkalischen Verbindungen hergestellt werden (z.B. nach DE-OS 540 863) und wird die Dünnsäure oder Waschflüssigkeit erst dann zugesetzt, wenn mindestens 50 % der Gesamtdauer des Hydrolyseprozesses vergangen sind, dann können die o.g. Nachteile wie Verringerung der Hydrolyseausbeute und Verschlechterung der $TiO_2$-Pigmentqualität vermieden und außerdem eine deutliche Erhöhung der Dünnsäurekonzentration erreicht werden.

Durch die Anwendung des erfindungsgemäßen Verfahrens kann die Konzentration der Dünnsäure um bis zu 20 % gegenüber der Konzentration, die bei sorgfältiger Prozeßführung nach dem Stand der Technik erreicht wird, erhöht werden. Zusätzlich wird eine Verbesserung der Pigmentqualität beobachtet, wenn nach dem erfindungsgemäßen Verfahren gearbeitet wird.

Die erfindungsgemäße Zugabe der Dünnsäure oder Waschflüssigkeit erfolgt frühestens 40 Minuten nach Vermischen der Titanylsulfatlösung mit den Hydrolysekeimen. Bevorzugt wird die Dünnsäure oder Waschflüssigkeit 90 bis 250 Minuten nach Zugabe der Hydrolysekeime zugegeben.

Die Vorteile des erfindungsgemäßen Verfahrens sollen durch die folgenden Vergleichsbeispiele und Beispiele verdeutlicht werden.

Beispiel 1 (Vergleichsbeispiel)

Aus den Rohstoffen Titanschlacke und Ilmenit hergestellte Titanylsulfatlösung enthält Titanylsulfat entsprechend 230 g/l $TiO_2$, wovon 1,3 g/l als Ti(III)-Sulfat vorliegen. Das Gewichtsverhältnis von $H_2SO_4$ : $TiO_2$ liegt bei 2,04 und das von $FeSO_4$ : $TiO_2$ bei 0,5. Außerdem enthält die Lösung neben anderen Metallsulfaten 0,34

2

g/l Chrom und 0,87 g/l Vanadium als Sulfate.

Zur Durchführung der Hydrolyse nach dem Eigenkeim-Verfahren ("Blumenfeld-Verfahren") werden 0,95 m³ Wasser mit 96°C vorgelegt. Unter Rühren werden 0,03 m³ obiger, auf 96°C erhitzter Titanylsulfatlösung während 2 Sekunden und nach 25 Sekunden 4,32 m³ Titanylsulfatlösung zügig zugegeben. Die Mischung wird dann durch Einleiten von Dampf zum Sieden gebracht und 25 Minuten lang bis zum Erreichen einer gewissen Trübung ("match point") gekocht. Danach wird die Dampfeinleitung 30 Minuten lang unterbrochen und anschließend mit Dampf 2,5 Stunden auf Siedetemperatur gehalten.

Am Ende des Hydrolyseprozesses resultieren 5,55 m³ Suspension mit 180 g/l $TiO_2$.

Nach Abkühlen auf 60°C wird das Hydrolysat durch Vakuumfiltration von der Dünnsäure getrennt und mit Wasser gewaschen, wobei Waschflüssigkeit, sogenannte Waschsäure, anfällt. Anschließend wird es durch Zugabe von Al-Pulver und Schwefelsäure gebleicht, filtriert und gewaschen.

Der Filterkuchen wird mit den Einstellchemikalien Phosphorsäure, Alkalien und Rutilkeimen versetzt und bei 950°C in einem Drehrohrofen zu Rutilpigment kalziniert. Das so erhaltene Pigment dient als Standard für die Beurteilung der bei den weiteren Versuchen erhaltenen Pigmente. Bei allen weiteren Versuchen wird die gleiche Titanylsulfatlösung als Rohstoff eingesetzt und die Verarbeitung des Hydrolysats zum Rutilpigment auf analoge Weise durchgeführt.

Die Versuchsergebnisse sind in der Tabelle zusammengestellt.

Beispiel 2 (Vergleichsbeispiel)

Die Hydrolyse wird analog Beispiel 1 durchgeführt mit dem Unterschied, daß für die Eigenkeimbildung nicht Wasser, sondern Waschflüssigkeit (Waschsäure) mit einem Gehalt von 2 Gew.-% $H_2SO_4$ vorgelegt wird.

Beispiel 3 (Vergleichsbeispiel)

Die Hydrolyse wird analog Beispiel 1 durchgeführt, aber statt Wasser wird Waschsäure mit 5 Gew.-% $H_2SO_4$ vorgelegt.

Die Vergleichsbeispiele 2 und 3 zeigen, daß das in der US-Patentschrift 2 331 496 beschriebene Verfahren zur Titanylsulfathydrolyse nicht geeignet ist, merkliche Mengen Dünnsäure oder Waschsäure in den Hydrolyseprozeß zurückzuführen.

Beispiel 4 (Vergleichsbeispiel)

Titanylsulfatlösung wird unter Verwendung von Hydrolysekeimen, die durch Reaktion von obiger Titanylsulfatlösung mit alkalischen Verbindungen erzeugt worden sind, hydrolysiert ("Mecklenburg-Verfahren"). 4,35 m³ der Titanylsulfatlösung (entsprechend 1 t $TiO_2$) werden mit 49 l der separat hergestellten Hydrolysekeimsuspension versetzt. Die Mischung wird durch Einleiten von Dampf zum Sieden gebracht und bis zum Erreichen des "match point" gekocht. Anschließend wird die Dampfeinleitung 30 Minuten lang unterbrochen, erneut zum Sieden gebracht und 2,5 Stunden gekocht.

Nachdem 150 Minuten Gesamtprozeßdauer vergangen sind, werden 0,92 m³ Wasser zugesetzt, wodurch sich am Ende des Prozesses ein $TiO_2$-Gehalt von 180 g/l ergibt.

Beispiel 5 (Vergleichsbeispiel)

4,35 m³ der Titanylsulfatlösung werden mit 49 l der Hydrolysekeimsuspension gemischt und mit 0,92 m³ Waschsäure versetzt, die 10 Gew.-% $H_2SO_4$ enthält. Damit ist die $TiO_2$-Konzentration die Gleiche wie in Beispiel 1 nach der Keimbildung. Die weitere Hydrolyse und Verarbeitung des Hydrolysats werden analog Beispiel 1 durchgeführt.

Beispiele 6 - 8

Die Hydrolyse wird analog Beispiel 4 durchgeführt, jedoch werden statt Wasser Waschsäure oder Dünnsäure zugegeben, nachdem mindestens 50 % der Gesamtdauer des Hydrolyseprozesses vergangen sind.

Die Zugabe erfolgt in Beispiel 6 nach 110 Minuten, in Beispiel 7 nach 200 Minuten, in Beispiel 8 nach 130 Minuten.

Beispiele 9 - 11

Für die Beispiele 9 - 11 ist die Titanylsulfatlösung von 230 g/l $TiO_2$ auf einen $TiO_2$-Gehalt von 240 g/l eingedampft worden. Die Hydrolysen werden analog Beispiel 4 durchgeführt. Entsprechend dem höheren $TiO_2$-Gehalt können statt 0,92 m³ Waschsäure oder Dünnsäure jeweils 1,1 m³ zugegeben werden, um die Endkonzentration von 180 g/l $TiO_2$ zu erreichen.

Die Säurezugabe erfolgt in Beispiel 9 nach 120 Minuten, in Beispiel 10 und 11 nach 150 Minuten.

Die erfindungsgemäßen Beispiele 6 bis 11 zeigen (siehe Tabelle), daß erhebliche Mengen Dünnsäure oder Waschsäure (= dünnsäurehaltige Waschflüssigkeit) in den Hydrolyseprozeß zurückgeführt werden können, ohne daß die Hydrolyseausbeute wesentlich verschlechtert wird. Überraschend wird die Qualität der unter Standardbedingungen aus den Hydrolysaten hergestellten Rutilpigmente durch die Anwendung des erfindungsgemäßen Verfahrens verbessert. Durch die erfindungsgemäße Prozeßführung kann der $H_2SO_4$-Gehalt der vom Hydrolysat abfiltrierten Dünnsäure von 25 Gew.-% bis auf nahezu 29 Gew.-% erhöht werden.

Mengenangaben pro t $TiO_2$ in Lösung

| Beispiel | Verfahren | $TiOSO_4$-Lösung vor der Hydrolyse | | Zur Hydrolyse-Keimbildung werden benötigt | Zusatz nach Vermischen von Hydrolyse-Keimen und $TiOSO_4$-Lösung | Wasser als Kondensat $m^3$ | Flüssigkeit für 180 g/l $TiO_2$-Endkonzentration $m^3$ | freie $H_2SO_4$ in der Flüssigkeit % | freie $H_2SO_4$ in der anfallenden Dünnsäure % | Ausbeute am Ende der Hydrolyse % | Helligkeit des Pigments Ry |
|---|---|---|---|---|---|---|---|---|---|---|---|
| | | Menge $m^3$ | g/l $TiO_2$ | | | | | | | | |
| 1 | Eigenkeim | 4,35 | 230 | 0,95 $m^3$ Wasser | - | 0,25 | - | - | 25,0 | 96,6 | ± 0 |
| 2 | " | 4,35 | 230 | 0,95 $m^3$ 2%ige $H_2SO_4$ | - | 0,25 | - | - | 24,7 | 93,5 | - 2,5 |
| 3 | " | 4,35 | 230 | 0,95 $m^3$ 5%ige $H_2SO_4$ | - | 0,25 | - | - | 18,9 | 63 | - |
| 4 | Fremdkeim | 4,35 | 230 | 0,03 $m^3$ $H_2O$ | - | 0,25 | 0,92 | - | 25,1 | 96,8 | + 0,1 |
| 5 | " | 4,35 | 230 | 0,03 $m^3$ $H_2O$ | 0,92 $m^3$ 10%ige $H_2SO_4$ | 0,25 | - | - | 26,2 | 96,0 | - 0,3 |
| 6 | " | 4,35 | 230 | 0,03 $m^3$ $H_2O$ | - | 0,25 | 0,92 | 15 | 26,7 | 96,6 | + 0,4 |
| 7 | " | 4,35 | 230 | 0,03 $m^3$ $H_2O$ | - | 0,25 | 0,92 | 20 | 27,4 | 96,3 | + 0,5 |
| 8 | " | 4,35 | 230 | 0,03 $m^3$ $H_2O$ | - | 0,25 | 0,92 | 25 | 28,2 | 96,1 | + 0,4 |
| 9 | " | 4,17 | 240 | 0,03 $m^3$ $H_2O$ | - | 0,25 | 1,1 | 15 | 27,1 | 96,6 | + 0,5 |
| 10 | " | 4,17 | 240 | 0,03 $m^3$ $H_2O$ | - | 0,25 | 1,1 | 20 | 27,9 | 96,2 | + 0,4 |
| 11 | " | 4,17 | 240 | 0,03 $m^3$ $H_2O$ | - | 0,25 | 1,1 | 25 | 28,8 | 95,8 | + 0,4 |

EP 0 376 031 B1

**Patentansprüche**

1. Verfahren zur Herstellung von TiO$_2$-Pigmenten durch Hydrolyse von Titanylsulfat, wobei die Hydrolyse des Titanylsulfats unter Verwendung von Hydrolysekeimen erfolgt, die separat durch Reaktion von Titansalzen mit alkalischen Reagentien erzeugt worden sind, Abtrennen des Hydrolysats von der bei der Hydrolyse erzeugten Dünnsäure, Waschen des Hydrolysats und Kalzinieren des Hydrolysats unter Bildung von TiO$_2$-Pigmenten, dadurch gekennzeichnet, daß nach mindestens 50 % der Gesamtdauer des Hydrolyseprozesses Dünnsäure und/oder dünnsäurehaltige Waschflüssigkeit zugefügt wird.

2. Verfahren nach Anspruch 1, dadurch gekennzeichnet, daß 0,1 bis 1,5 m$^3$ Dünnsäure und/oder dünnsäurehaltige Waschflüssigkeit pro 1 t TiO$_2$ zugefügt werden.

3. Verfahren nach Anspruch 1 oder 2, dadurch gekennzeichnet, daß die Dünnsäure und/oder Waschflüssigkeit nicht früher als 40 Minuten nach dem Mischen der Titanylsulfatlösung mit den Hydrolysekeimen zugefügt wird.

4. Verfahren nach einem der Ansprüche 1 bis 3, dadurch gekennzeichnet, daß die Dünnsäure und/oder Waschflüssigkeit 90 bis 250 Minuten nach dem Mischen der Titanylsulfatlösung mit den Hydrolysekeimen zugefügt wird.

**Claims**

1. A process for the production of TiO$_2$ pigments by hydrolysis of titanyl sulphate, wherein the hydrolysis of the titanyl sulphate is carried out using hydrolysis nuclei that have been produced separately by reaction of titanium salts with alkaline reagents, separation of the hydrolyzate from the dilute acid produced during the hydrolysis, washing the hydrolyzate and calcination of the hydrolyzate with formation of TiO$_2$ pigments, characterized in that after at least 50 % of the total duration of the hydrolysis process dilute acid and/or wash liquid containing dilute acid is added.

2. A process according to claim 1, characterized in that 0.1 to 1.5 m$^3$ dilute acid and/or wash liquid containing dilute acid per 1 t TiO$_2$ is added.

3. A process according to claim 1 or 2, characterized in that the dilute acid and/or wash liquid is added no earlier than 40 minutes after the mixing of the titanyl sulphate solution with the hydrolysis nuclei.

4. A process according to one of claims 1 to 3, characterized in that the dilute acid and/or wash liquid is added 90 to 250 minutes after the mixing of the titanyl sulphate solution with the hydrolysis nuclei.

**Revendications**

1. Procédé de préparation de pigments de TiO$_2$ par hydrolyse du sulfate de titanyle dans lequel on hydrolyse le sulfate de titanyle avec utilisation de germes d'hydrolyse produits séparément par réaction de sels de titane avec des réactifs alcalins, on sépare l'hydrolysat de l'acide dilué produit à l'hydrolyse, on lave l'hydrolysat et on calcine l'hydrolysat avec formation de pigments de TiO$_2$, caractérisé en ce que l'on ajoute l'acide dilué et/ou du liquide de lavage contenant l'acide dilué après écoulement d'au moins 50 % de la durée totale de l'opération d'hydrolyse.

2. Procédé selon la revendication 1, caractérisé en ce que l'on ajoute de 0,1 à 1,5 m$^3$ d'acide dilué et/ou de liquide de lavage contenant l'acide dilué, par tonne de TiO$_2$.

3. Procédé selon la revendication 1 ou 2, caractérisé en ce que l'acide dilué et/ou le liquide de lavage sont ajoutés au plus tôt 40 min après mélange de la solution de sulfate de titanyle avec les germes d'hydrolyse.

4. Procédé selon l'une des revendications 1 à 3, caractérisé en ce que l'acide dilué et/ou le liquide de lavage sont ajoutés de 90 à 250 min après mélange de la solution de sulfate de titanyle avec les germes d'hydrolyse.